# FASCICULE DE BREVET EUROPEEN

(11) **EP 1 603 778 B1**
(45) Date de publication et mention de la délivrance du brevet: **16.08.2006**
(21) Numéro de dépôt: 04742271.2
(22) Date de dépôt: 17.03.2004
(51) Int. Cl.: B60R 21/34

(54) **BUTEE D 'ABSORPTION DE CHOC POUR VEHICULE AUTOMOBILE**
STOSSDÄMPFERANSCHLAG FÜR EIN KRAFTFAHRZEUG
SHOCK ABSORBER STOP FOR A MOTOR VEHICLE

(30) Priorité: 17.03.2003 FR 0303256
(43) Date de publication de la demande: 14.12.2005
(73) Titulaire: Renault s.a.s., 92100 Boulogne Billancourt (FR)
(72) Inventeur: GIRARDI, Lionel, F-78310 Coignières (FR); MANGOLD, Manuel, Seoul (KR); SEYRANIAN, Chaene, Serge, F-78920 Ecquevilly (FR)
(86) Numéro de dépôt international: PCT/FR2004/000653
(87) Numéro de publication internationale: WO 2004/083009

(56) Documents cités:
- EP-A- 1 104 726
- EP-A- 1 118 530
- EP-A- 1 375 266
- DE-A- 10 116 284

## Description

La présente invention concerne, de façon générale, une butée d'absorption de choc.

Plus particulièrement, l'invention concerne une butée d'absorption de choc pour véhicule automobile, comprenant une base disposée à une première extrémité de la butée, un organe d'amortissement élastiquement déformable disposé à une seconde extrémité de la butée, et un support s'étendant depuis la base et portant l'organe d'amortissement.

Lors d'un choc avant entre un véhicule automobile et un piéton, la tête de celui-ci vient généralement percuter la carrosserie du véhicule, et touche principalement le capot avant, les montants de baie ou le pare-brise.

C'est la raison pour laquelle de nombreux constructeurs d'automobiles ont développé diverses solutions visant à amortir le choc subi par un piéton percuté par un véhicule automobile, le choc pouvant par exemple être amorti par une butée d'absorption de choc.

Une butée du type précédemment défini, permettant un tel amortissement de chocs, est par exemple décrite dans le document brevet EP 1 104 726 A2, qui révèle les éléments selon le préambule de la revendication 1, de VOLKSWAGENWERK AG.

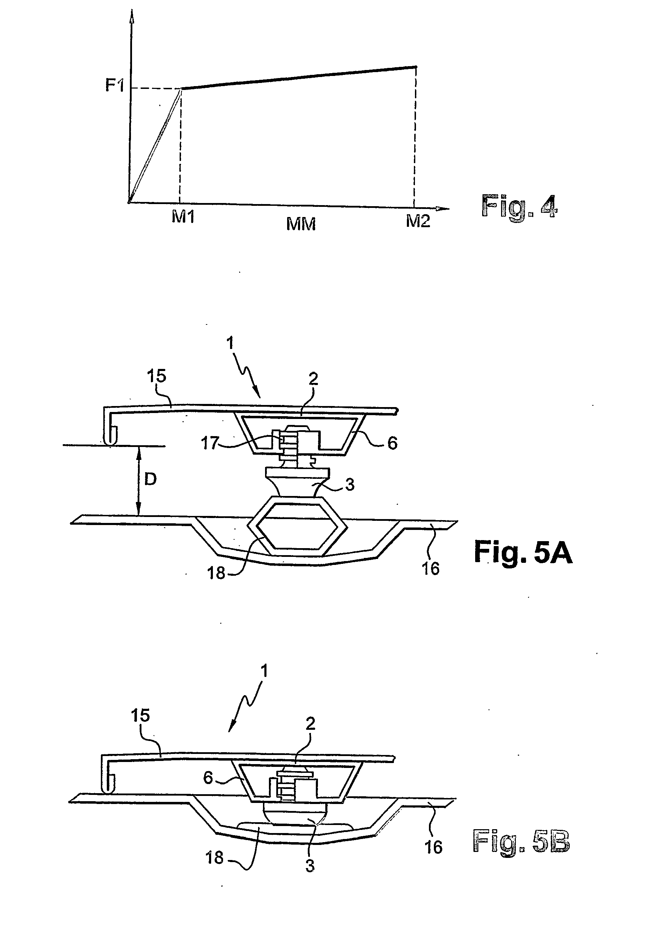

Les figures 5-A et 5-B représentent une butée pour absorption de choc piéton telle que divulguée dans ce document de l'art antérieur. La position avant choc est représentée à la figure 5-A et la position après le choc et après déformation totale de la butée est représentée à la figure 5-B.

La butée 1 de la figure 5-A est disposée sur le capot 15 d'un véhicule et vient en butée contre une structure déformable plastiquement 18 elle-même fixée sur un élément fixe de carrosserie 16.

L'organe d'amortissement est de forme cylindrique et possède une série de gorges 17 sur sa périphérie externe. Le support 6 possède une portion tubulaire de forme complémentaire avec la forme cylindrique de l'organe d'amortissement. Des épaulements de forme complémentaire aux gorges 17 sont positionnées dans celles-ci et constituent un arrêt en translation de l'organe d'amortissement 3 par rapport au support 6.

A moment du choc, le capot à tendance à s'enfoncer en direction de l'élément de carrosserie induisant corrélativement une force opposée au sens d'enfoncement du capot sur l'organe d'amortissement 3 qui se déforme élastiquement. Lorsque l'effort appliqué sur le capot est trop important l'organe d'amortissement 3 se déforme complètement et l'arrêt en translation de l'organe d'amortissement cède par déformation de ses gorges 17 entraînant le coulissement de l'organe d'amortissement 3 par rapport au support 6.

Cette fusibilité de l'assemblage entre l'organe d'amortissement et le support permet d'absorber une partie des efforts résultant du choc piéton.

De même, lors d'un choc piéton, la structure déformable plastiquement 18 qui a la forme d'un hexaèdre s.e déforme et s'écrase permettant ainsi une fonction d'absorption de choc lors du déplacement du capot 15 par rapport à l'élément fixe de carrosserie 16.

L'assemblage de cette butée sur son support est donc un assemblage fusible difficilement réversible ce qui oblige le remplacement de la butée après chaque choc. De plus, en cas de choc, l'assemblage fusible de la butée cède brusquement ce qui entraîne une discontinuité de l'effort résistant à l'enfoncement exercé par la butée sur le capot. Enfin une fois déformée, la structure déformable plastiquement 18 ne peut revenir en place ce qui impose le changement d'au moins une partie du mécanisme de butée et complexifie la réparation.

Dans ce contexte, la présente invention a pour but de proposer une butée d'absorption de choc pour véhicule automobile permettant une fonction de butée élastique de maintien du capot en position normale de fermeture, et une fonction d'absorption de choc en cas de choc piéton. L'effort résistant exercé par la butée sur le capot doit être croissant et continu au cours du mouvement d'enfoncement du capot. Après absorption de choc, la butée doit également être capable de revenir dans sa position d'origine et autoriser une répétitivité de la fonction d'absorption de choc.

A cette fin, la butée d'absorption de choc pour véhicule automobile de l'invention, par ailleurs conforme à la définition générique qu'en donne le préambule ci-dessus, est essentiellement caractérisée en ce que le support comprend un élément élastiquement compressible et une cage de longueur variable, inférieure à une longueur maximale déterminée, la cage maintenant l'élément élastiquement compressible dans un état de précontrainte, et l'organe d'amortissement et l'élément élastiquement compressible présentant des première et seconde raideurs respectives, dont la première est supérieure à la seconde.

En fonction de l'amplitude de compression de la butée, la butée adopte sélectivement une configuration de fermeture et une configuration d'absorption de choc. Le passage de la configuration de fermeture vers la configuration d'absorption de choc se produit lors du mouvement de compression de la butée, lorsque la force de compression exercée sur la butée devient supérieure à la force de précontrainte de l'élément élastiquement compressible.

Ainsi lorsque la butée est en configuration de fermeture, la force de compression appliquée sur la butée est insuffisante pour comprimer l'élément compressible précontraint et seul l'organe d'amortissement est déformé élastiquement. Dans cette configuration de fermeture, la butée permet l'absorption de vibrations et de chocs de faible intensité généralement produits lors du roulage du véhicule ou lors de la fermeture du capot.

En cas de choc ou d'effort important exercé sur la butée, la force de compression exercée sur la butée devient supérieure à la force de précontrainte de l'élément élastiquement compressible. L'élément élastiquement compressible se déforme alors élastiquement en même temps que la cage de longueur variable, permettant ainsi l'absorption d'une partie de l'énergie du choc.

Grâce à la butée selon l'invention, l'effort résistant à la compression de la butée est continu y compris lors du passage de la butée de sa configuration de fermeture à sa configuration d'absorption de choc.

La première raideur de l'organe d'amortissement élastiquement déformable est supérieure à la seconde raideur de l'élément élastiquement compressible. De cette manière, la raideur de la butée d'absorption de choc en configuration de fermeture est supérieure à sa raideur en configuration d'absorption de choc.

Dans un exemple particulier, l'élément élastiquement compressible comprend un ressort, tel qu'un ressort hélicoïdal.

D'autres caractéristiques et avantages de l'invention ressortiront clairement de la description qui en est faite ci-après, à titre indicatif et nullement limitatif, en référence aux dessins annexés, dans lesquels:
la figure 1 représente une coupe de la butée d'absorption de choc selon l'invention en configuration de fermeture ;
la figure 2 représente une coupe de la butée d'absorption de choc selon l'invention en configuration d'absorption de choc ;
la figure 3 représente une vue générale d'un véhicule doté d'une butée d'absorption de choc selon l'invention ;
la figure 4 représente une courbe type d'évolution d'efforts en fonction de l'amplitude de compression de la butée ;
les figures 5-A et 5-B représentent une butée d'absorption de choc de l'art antérieur.

Comme annoncé précédemment, l'invention concerne une butée pour absorption de choc pour véhicule.

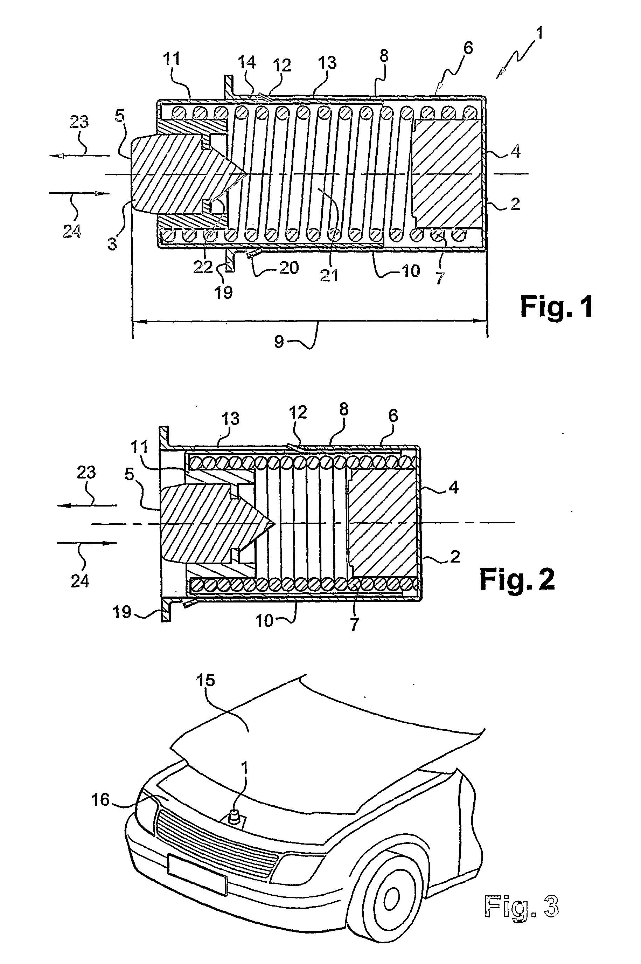

La butée 1 représentée aux figures 1 et 2 comporte une base 2 disposée à la première extrémité 4 de la butée 1, ainsi qu'un organe d'amortissement 3 élastiquement déformable disposé à une seconde extrémité 5 de la butée 1 et un support 3 s'étendant depuis la base 2 et portant l'organe d'amortissement 3. L'organe d'amortissement 3 élastiquement déformable est composé d'un matériau souple et élastique tel qu'un matériau élastomère comme du caoutchouc. Cet organe 3 possède une première raideur K1 et peut également avoir une dureté d'environ 40 newtons/mm² .

Le support 3 comprend une cage 8 de longueur variable maintenant un élément élastiquement compressible 7 tel qu'un ressort dans un état précontraint.

Cette cage 8 télescopique et compressible est formée de premier 10 et second 11 tubes métalliques coulissant l'un dans l'autre. Le second tube 11 est disposé à l'intérieur du premier tube 10 dont le diamètre interne et voisin et légèrement supérieur au diamètre externe du second tube 11. Ces deux tubes sont préférentiellement assemblés de manière étanche afin d'éviter un risque de détérioration et de blocage de l'assemblage. A cette fin, des joints anti-humidité et/ou anti-poussières peuvent être utilisés à l'endroit de la liaison entre les tubes.

La première extrémité du premier tube 10 du coté de la base 2 est obturé par un disque circulaire formant la base 2 de la butée 1. La seconde extrémité de ce premier tube 10 possède un épaulement extérieur 19 destiné à venir en appui sur un élément de carrosserie 16.

Ce premier tube 10 possède également un système de clipsage 20 pour le blocage en position du premier tube du support 6 par rapport audit élément de carrosserie 16 sur lequel il doit venir en appui et être assemblé. Ce système de clipsage comporte un ergot élastique 20 formé sur une portion du premier tube 10 proche de l'épaulement 19 et s'étendant à l'extérieur du premier tube 10.

Le premier tube 10 de la buté 1 est inséré dans une ouverture pratiquée sur l'élément de carrosserie de manière à ce que l'épaulement 19 vienne en butée sur un premier coté de l'élément de carrosserie 16 et à ce que l'ergot du système de clipsage 20 vienne en appui sur le deuxième coté de l'élément de carrosserie 16.

Une fois assemblé sur l'élément de carrosserie, le tube 10 est ainsi maintenu en position par serrage élastique de l'ergot et arrêté en translation dans un sens par son épaulement 19 et dans un autre sens par l'ergot du système de clipsage 20.

Le second tube 11 supporte l'organe d'amortissement 3 à l'une de ses extrémités du coté de la seconde extrémité 5 de la butée 1. L'organe d'amortissement 3 élastique possède une première raideur K 1. Cet organe d'amortissement 3 est formé d'une portion conique 22 de centrage par rapport au second tube 11 et d'une portion plane venant en appui plan sur un épaulement interne du second tube 11 formant ainsi un arrêt en translation de l'organe d'amortissement 3 par rapport au second tube 11. L'organe d'amortissement 3 élastique est partiellement inséré et assemblé dans lé tube 11 laissant ainsi dépasser une portion de l'organe d'amortissement 3 hors du second tube 11. La portion de l'organe d'amortissement dépassant du tube 11 possède une raideur K 1 la rendant apte à être comprimée et à se déformer sous l'action d'une force externe à la butée 1.

Un système de guidage du second tube 11 par rapport au premier tube 10 est préférentiellement utilisé pour éviter une rotation relative entre ces deux tubes mais aussi pour limiter l'amplitude du mouvement de translation entre ces deux tubes.

Ce système de guidage comprend généralement au moins un ergot 12 formé dans l'un au moins des deux tubes 10 et 11 et venant glisser dans une ouverture allongée disposée sur la paroi de l'autre tube. Dans le cas de la figure 1, le second tube 11 possède un ergot 12 coulissant dans une ouverture allongée 13 disposée sur le premier tube 10. L'ouverture allongée 13 est allongée parallèlement à l'axe de compression 21 de la butée 1.

Lorsque la butée 1 est en configuration de fermeture, la cage 8 est allongée au maximum, et l'ergot 12 vient en butée longitudinale sur une extrémité de l'ouverture allongée 13 de manière à limiter l'amplitude d'allongement de la cage 18. L'écartement par coulissement du premier tube 10 par rapport au second tube 11 est alors impossible du fait de la butée de l'ergot 12 dans l'ouverture allongée 13.

Un élément élastiquement compressible 7 est disposé à l'intérieur des premier 10 et second 11 tubes et vient en appui respectif sur au moins une portion de surface interne du premier tube 10 et au moins une portion de surface interne du second tube 11, exerçant ainsi une force d'éloignement de ces tubes axée selon l'axe de compression 21.

La figure 3 représente un véhicule à moteur utilisant la butée 1 d'absorption de choc selon l'invention.

Le véhicule possède un capot 15 mobile par rapport à un élément de carrosserie 16 du véhicule.

La butée 1 qui est fixée sur l'élément de carrosserie 16 est interposée entre le capot 15 et l'élément de carrosserie 16.

En position de fermeture du capot, le capot 15 vient en butée sur l'organe d'amortissement 3 qui en l'absence de choc violent est partiellement déformé par le capot 15.

Toujours en l'absence de choc violent, la force de compression appliquée par le capot sur l'organe d'amortissement 3 de la butée est inférieure à la force de précontrainte de l'élément élastiquement compressible 7 qui peut être de 650 Newtons. Ainsi, en l'absence de choc, lorsque la force exercée sur la butée 1 est inférieure à la force de précontrainte, seul l'organe d'absorption de choc 3 ayant une première raideur K1 permet la fonction d'absorption de choc.

En cas de choc violent, tel qu'un choc piéton, la force de compression de la butée devient supérieure à la force de précontrainte de l'élément élastique compressible 7. L'élément élastique compressible 7 est alors compressé entraînant corrélativement la compression de la cage 8 de longueur variable. La longueur de la cage 8 diminue donc proportionnellement à la force de compression appliquée sur la butée 1 et sur l'élément élastique compressible de seconde raideur K2.

La seconde raideur K2 de l'élément élastique compressible 7 étant inférieure à la première raideur K1 de l'organe d'amortissement 3, lorsque la butée est compressée au-delà de la force de précontrainte, la raideur globale de la butée devient alors inférieure où égale à la première raideur K1.

De ce fait la butée peut remplir une fonction d'absorption de choc étagée en fonction de la force de compression exercée sur la butée. Cette fonction d'absorption de choc étagée à une raideur variable selon que la butée est soumise à de faibles efforts de compression comme lors du roulage du véhicule, ou selon que la butée est soumise à des efforts de compression supérieurs à la force de précontrainte de l'élément élastique compressible 7 comme c'est le cas lors d'un choc piéton.

Cette fonction d'absorption étagée est représentée sur la courbe de la figure 4.

Cette courbe représente la variation des efforts résistants à la compression de la butée en Newtons en fonction de la variation de l'amplitude de compression de cette butée en mm.

Pour une faible amplitude de compression de la butée comprise entre zéro et M1 mm, l'effort résistant à la compression augmente selon une courbe à fort taux de croissance de pente constante sensiblement égale à la première raideur K1.

Lorsque l'amplitude de compression de la butée devient supérieure à M1 mm, la pente de la courbe des efforts résistants à la compression devient alors plus faible, cette pente étant sensiblement supérieure et proche à la seconde raideur K2.

Cette courbe illustre donc les deux fonctions principales de la butée qui sont l'amortissement des efforts de faible intensité avec une forte raideur K1, et l'amortissement des efforts de plus forte intensité tels qu'un choc piéton avec une raideur plus faible K2.

Après la phase d'absorption de choc et de compression de la cage 8 de la butée, celle-ci a emmagasiné une énergie élastique par l'intermédiaire de l'élément élastiquement compressible 7. Sous l'effet de cette énergie élastique, la butée 1 est alors aptes à reprendre sa configuration et sa longueur d'origine par allongement de la cage 8 selon un mouvement de relâchement 23 inverse du mouvement de compression 24.

## Revendications

1. Butée (1) d'absorption de choc pour véhicule automobile, comprenant une base (2) disposée à une première extrémité (4) de la butée (1), un organe d'amortissement (3) élastiquement déformable disposé à une seconde extrémité (5) de la butée (1), et un support (6) s'étendant depuis la base (2) et portant l'organe d'amortissement (3), **caractérisée en ce que** le support (6) comprend un élément élastiquement compressible (7) et une cage (8) de longueur variable, inférieure à une longueur maximale déterminée (9), la cage (8) maintenant l'élément élastiquement compressible (7) dans un état de précontrainte, et l'organe d'amortissement (3) et l'élément élastiquement compressible (7) présentant des première et seconde raideurs respectives, dont la première est supérieure à la seconde.

2. Butée (1) d'absorption de choc suivant la revendication 1, **caractérisée en ce que** l'élément élastiquement compressible (7) comprend un ressort, tel qu'un ressort hélicoïdal.

3. Butée (1) d'absorption de choc suivant l'une quelconque des revendications 1 et 2, **caractérisée en ce que** la cage (8) est télescopique ou compressible.

4. Butée (1) d'absorption de choc suivant l'une quelconque des revendications précédentes, **caractérisée en ce que** la cage (8) comprend des premier 10 et second 11 tubes coulissant l'un dans l'autre.

5. Butée (1) d'absorption de choc suivant la revendication 4, **caractérisée en ce que** le second tube (11) est disposé à l'intérieur du premier tube (10) et coulisse dans celui-ci.

6. Butée (1) d'absorption de choc suivant l'une quelconque des revendications 4 ou 5, **caractérisée en ce que** l'un au moins des deux tubes (11) comporte au moins un ergot (12) coulissant dans une ouverture allongée (13)disposée sur l'autre tube (10).

7. Butée (1) d'absorption de choc suivant la revendication 6, **caractérisée en ce que** ledit ergot (12) est apte à venir en butée longitudinale sur une extrémité de l'ouverture allongée (13) de manière à limiter l'amplitude de coulissement du premier tube (10) par rapport au second tube (11).

8. Butée (1) d'absorption de choc suivant l'une quelconque des revendications précédentes, **caractérisée en ce que** le support (6) comporte un moyen de fixation par clipsage du support (6) sur un support d'appui de la butée.

9. Butée (1) d'absorption de choc suivant l'une quelconque des revendications précédentes, **caractérisée en ce que** l'organe d'amortissement (3) est au moins partiellement composé de matériau élastomère souple.

10. Butée (1) d'absorption de choc suivant l'une quelconque des revendications précédentes, **caractérisée en ce que** la cage (8) est métallique.

11. Application d'une butée (1) suivant l'une quelconque des revendications précédentes à l'absorption d'un choc d'un piéton sur un capot (15) d'un véhicule à moteur, dans laquelle le capot (15) est mobile par rapport à un élément de carrosserie (16), de part et d'autre d'une position de fermeture du capot, la butée (1) étant interposée entre le capot (15) et l'élément de carrosserie (16), et l'organe d'amortissement (3), en l'absence de choc, étant partiellement déformé dans la position de fermeture du capot.

## Claims

1. Shock-absorbing stop (1) for a motor vehicle, comprising a base (2) placed at a first end (4) of the stop (1), an elastically deformable damping member (3) placed at a second end (5) of the stop (1) and a support (6) extending from the base (2) and supporting the damping member (3), **characterized in that** the support (6) comprises an elastically compressible element (7) and a cage (8) of variable length, less than a maximum determined length (9), the cage (8) holding the elastically compressible element (7) in a prestressed state, and the damping member (3) and the elastically compressible element (7) having respective first and second stiffnesses, the first of which being greater than the second.

2. Shock-absorbing stop (1) according to Claim 1, **characterized in that** the elastically compressible element (7) comprises a spring, such as a coil spring.

3. Shock-absorbing stop (1) according to either one of Claims 1 and 2, **characterized in that** the cage (8) is telescopic or compressible.

4. Shock-absorbing stop (1) according to any one of the preceding claims, **characterized in that** the cage (8) comprises a first tube (10) and a second tube (11) sliding one in the other.

5. Shock-absorbing stop (1) according to Claim 4, **characterized in that** the second tube (11) is placed inside the first tube (10) and slides in the latter.

6. Shock-absorbing stop (1) according to either one of Claims 4 or 5, **characterized in that** at least one of the two tubes (11) comprises at least one lug (12) sliding in an elongated opening (13) placed on the other tube (10).

7. Shock-absorbing stop (1) according to Claim 6, **characterized in that** the said lug (12) is capable of coming to butt longitudinally against one end of the elongated opening (13) so as to limit the amplitude of sliding of the first tube (10) relative to the second tube (11).

8. Shock-absorbing stop (1) according to any one of the preceding claims, **characterized in that** the support (6) comprises means of clipping the support (6) to a bearing support of the stop.

9. Shock-absorbing stop (1) according to any one of the preceding claims, **characterized in that** the damping member (3) is made at least partially of flexible elastomer.

10. Shock-absorbing stop (1) according to any one of the preceding claims, **characterized in that** the cage (8) is metallic.

11. Application of a stop (1) according to any one of the preceding claims to the absorption of a shock of a pedestrian on a bonnet (15) of a motor vehicle, in which the bonnet (15) can be moved relative to an element of bodywork (16), either side of a closure position of the bonnet, the stop (1) being interposed between the bonnet (15) and the bodywork element (16), and the damping member (3) in the absence of a shock, being partially deformed in the closed position of the bonnet.

## Patentansprüche

1. Stoßdämpferanschlag (1) für ein Kraftfahrzeug, der eine an einem ersten Ende (4) des Anschlags (1) angeordnete Basis (2), ein an einem zweiten Ende (5) des Anschlags (1) angeordnetes elastisch verformbares Dämpfungsglied (3) und eine sich von der Basis (2) aus erstreckende Stütze (6) umfasst, die das Dämpfungsglied (3) trägt, **dadurch gekennzeichnet, dass** die Stütze (6) ein elastisch komprimierbares Element (7) und einen Käfig (8) mit variabler Länge unter einer bestimmten maximalen Länge (9) umfasst, wobei der Käfig (8) das elastische komprimierbare Element (7) in einem vorgespannten Zustand hält und wobei das Dämpfungsglied (3) und das elastisch komprimierbare Element (7) eine erste bzw. eine zweite Steifigkeit aufweisen, wobei die erste größer ist als die zweite.

2. Stoßdämpferanschlag (1) nach Anspruch 1, **dadurch gekennzeichnet, dass** das elastische komprimierbare Element (7) eine Feder, wie zum Beispiel eine Schraubenfeder, umfasst.

3. Stoßdämpferanschlag (1) nach Anspruch 1 und 2, **dadurch gekennzeichnet, dass** der Käfig (8) ausziehbar oder komprimierbar ist.

4. Stoßdämpferanschlag (1) nach einem der vorhergehenden Ansprüche, **dadurch gekennzeichnet, dass** der Käfig (8) ein erstes 10 und ein zweites 11 Rohr umfasst, die ineinander gleiten.

5. Stoßdämpferanschlag (1) nach Anspruch 4, **dadurch gekennzeichnet, dass** das zweite Rohr (11) im Inneren des ersten Rohrs (10) angeordnet ist und in diesem gleitet.

6. Stoßdämpferanschlag (1) nach Anspruch 4 oder 5, **dadurch gekennzeichnet, dass** mindestens eines der Rohre (11) mindestens eine Nase (12) aufweist, die in einer am anderen Rohr (10) angeordneten länglichen Öffnung (13) gleitet.

7. Stoßdämpferanschlag (1) nach Anspruch 6, **dadurch gekennzeichnet, dass** die Nase (12) in Längsrichtung an einem Ende der länglichen Öffnung (13) in Anlage kommen kann, um das Ausmaß des Gleitens des ersten Rohrs (10) bezüglich des zweiten Rohrs (11) zu begrenzen.

8. Stoßdämpferanschlag (1) nach einem der vorhergehenden Ansprüche, **dadurch gekennzeichnet, dass** die Stütze (6) ein Mittel zur Rastbefestigung der Stütze (6) an einer Anlagestütze für den Anschlag aufweist.

9. Stoßdämpferanschlag (1) nach einem der vorhergehenden Ansprüche, **dadurch gekennzeichnet, dass** das Dämpfungsglied (3) zumindest teilweise aus flexiblem Elastomermaterial besteht.

10. Stoßdämpferanschlag (1) nach einem der vorhergehenden Ansprüche, **dadurch gekennzeichnet, dass** der Käfig (8) aus Metall besteht.

11. Anwendung eines Stoßdämpferanschlags (1) nach einem der vorhergehenden Ansprüche zur Aufnahme eines Aufpralls eines Fußgängers auf einer Motorhaube (15) eines Kraftfahrzeugs, bei der die Motorhaube (15) bezüglich eines Karosserieelements (16) auf beiden Seiten einer Schließstellung der Motorhaube beweglich ist, wobei der Anschlag (1) zwischen der Motorhaube (15) und dem Karosserieelement (16) angeordnet ist und wobei das Dämpfungsglied (3), wenn kein Aufprall vorliegt, in der Schließstellung der Motorhaube teilweise verformt ist.
